# DEMANDE DE BREVET EUROPEEN

(11) **EP 1 526 591 A2**
(43) Date de publication de la demande: **27.04.2005**
(21) Numéro de dépôt: 04292132.0
(22) Date de dépôt: 03.09.2004
(51) Int. Cl.: H01M 2/26

(54) **Procédé de raccordement électrique d'une connexion sur une sortie de courant**

(30) Priorité: 19.09.2003 FR 0311010
(71) Demandeur: SAFT, 93170 Bagnolet (FR)
(72) Inventeur: Freluche, Jean-Pierre, 16000 Angouleme (FR); Foulquier, Jérome, 16000 Angouleme (FR); Dupuy, Christian, La Foucaudie, 16440 Nersac (FR); Saunier, Pierre, 16730 Trois Palis (FR); Charollais, Philippe, 86600 St Sauvant (FR)
(74) Mandataire: Cabinet Hirsch

(57) **Abrégé**

La présente invention a pour objet un procédé de fabrication d'un générateur électrochimique secondaire (20) comprenant un conteneur comportant un bac (3) et un couvercle (4). Le procédé comporte une phase de raccordement électrique d'une connexion (21) à une sortie de courant, la longueur de la connexion ne lui permettant pas d'être en contact avec la sortie de courant lorsque le couvercle n'est pas dans sa position de fermeture. Cette phase comprend les étapes suivantes :
on relie électriquement une première extrémité (22) de la connexion à une électrode (2),
on met en place le couvercle sur le bac afin de fermer le conteneur de manière à ce que la deuxième extrémité (23) de la connexion se trouve en contact physique avec la sortie de courant électriquement isolée du bac,
on applique un courant électrique entre le bac et la sortie de courant de manière à souder la deuxième extrémité de la connexion sur la sortie de courant.

## Description

La présente invention concerne le raccordement électrique d'une connexion d'électrode sur une borne de sortie de courant. L'invention s'applique en particulier aux générateurs électrochimiques destinés aux équipements portables, dont la capacité est généralement inférieure à 20Ah, notamment aux générateurs électrochimiques secondaires cylindriques étanches à électrodes spiralées. L'invention se rapporte plus particulièrement au procédé de réalisation de ce raccordement.

Un générateur électrochimique comprend un faisceau électrochimique comportant une alternance d'électrodes positives et négatives encadrant un séparateur imprégné d'électrolyte. Chaque électrode est le plus souvent composée d'un support conducteur de courant métallique supportant sur au moins une de ses faces la matière électrochimiquement active. L'électrode est connectée électriquement à une sortie de courant qui assure la continuité électrique entre l'électrode et l'application extérieure à laquelle le générateur est associé. Cette sortie de courant peut être le conteneur du générateur, comme par exemple le couvercle, ou une borne de sortie de courant rapportée sur le conteneur.

Les générateurs cylindriques classiques présentent généralement un spiralage de faisceau électrochimique formant un bobineau. Le spiralage comprend alors deux électrodes respectivement de polarité positive et négative encadrant un séparateur. Il existe plusieurs façons de raccorder électriquement une électrode à une sortie de courant.

L'une de ces façons est l'utilisation d'au moins une lamelle conductrice ou mince bande métallique dont une extrémité est soudée sur le bord du support conducteur de courant de l'une des électrodes et l'autre extrémité est soudée à la partie de la sortie de courant située à l'intérieur du conteneur, comme par exemple la face interne du couvercle ou la partie interne d'une borne.

Une autre manière consiste à mettre en contact un collecteur de courant plan avec l'une des extrémités planes du bobineau formée par l'enroulement de la tranche du support conducteur de courant de l'une des électrodes. Dans ce cas les deux électrodes présentent un léger décalage en hauteur de manière à ce que chaque extrémité du bobineau soit formée par la tranche spiralée du support conducteur de courant d'une seule des deux électrodes. Le collecteur de courant plan, par exemple en forme de disque, peut être lui-même muni d'au moins une lamelle conductrice reliée à la sortie de courant.

En pratique, pour connecter une électrode à une sortie de courant, par exemple à une borne qui traverse un couvercle, l'extrémité de la lamelle est positionnée, maintenue et fixée sur la partie interne de la borne. Pour réaliser cette opération, il est indispensable de ménager un espace pour le positionnement de l'outil de soudage. Au cours de cette opération le couvercle se trouve alors dans une position sensiblement perpendiculaire à sa position de fermeture. Le générateur est ensuite fermé à l'aide du couvercle qui est rabattu. Dans ce mode de réalisation, le positionnement de la lamelle vis-à-vis de la partie interne de la borne s'avère mal aisé. La fermeture du couvercle engendre un pliage complexe de la connexion qui n'est pas maîtrisé. Au cours de cette opération, la fixation de la lamelle sur la borne, voire la lamelle elle-même, risque d'être détériorée.

Par exemple, le document EP-0 818 842 décrit un générateur cylindrique à électrolyte alcalin comportant deux électrodes spiralées de manière à ce que chaque extrémité du bobineau soit formée par l'enroulement de la tranche du support conducteur d'une seule électrode. Un collecteur de courant plan perforé est soudé sur la tranche supérieure du support conducteur de l'une des électrode. Une languette collectrice reliée au collecteur plan est soudée par point sur la face interne du couvercle, alors que le couvercle se trouve dans une position perpendiculaire à sa position de fermeture. Le couvercle est ensuite rabattu afin de fermer hermétiquement le bac par l'intermédiaire d'un joint isolant. La languette collectrice a une longueur suffisante pour avoir, une fois repliée, une surface de contact assez étendue avec la face interne du couvercle. Après fermeture du générateur, une tension de 24 Volts est appliquée dans le sens de la décharge entre le couvercle et le fond du bac de manière à provoquer le passage d'un courant de 1KA pendant 15 msec. Ainsi une deuxième soudure est réalisée entre la languette collectrice et la face interne du couvercle. Le raccordement électrique ainsi obtenu présente une meilleure résistance mécanique vis-à-vis d'un test de vibration. Cependant le positionnement de la languette collectrice sur la surface interne du couvercle lors de la fermeture du générateur s'avère une étape délicate à réaliser. En outre lors de la réalisation de la deuxième soudure, il peut se produire une déconnexion de la première soudure ou bien une fusion de la languette collectrice si la durée et l'intensité du courant ne sont pas parfaitement maîtrisées.

La présente invention a pour but de proposer un procédé de raccordement électrique entre une connexion électriquement reliée à une électrode et une sortie de courant afin de réaliser un générateur électrochimique secondaire dont l'impédance interne est réduite par rapport aux générateurs obtenus par les procédés connus.

L'objet de la présente invention est un procédé de fabrication d'un générateur électrochimique secondaire comprenant un conteneur comportant un bac et un couvercle portant une sortie de courant électriquement isolée dudit bac, et au moins une électrode électriquement reliée à une connexion, caractérisé en ce qu'il comporte une phase de raccordement électrique de ladite connexion à ladite sortie de courant comprenant les étapes suivantes :
- on relie électriquement une première extrémité de ladite connexion à ladite électrode,
- on met en place ledit couvercle sur ledit bac afin de fermer ledit conteneur de manière à ce qu'une deuxième extrémité de ladite connexion se trouve en contact physique avec ladite sortie de courant, la longueur de ladite connexion ne lui permettant pas d'être en contact avec ladite sortie de courant lorsque ledit couvercle n'est pas dans la position de fermeture dudit générateur,
- on applique un courant électrique entre ledit bac et ladite sortie de courant de manière à souder ladite deuxième extrémité de ladite connexion sur ladite sortie de courant.

La sortie de courant est destinée à mettre en relation électrique le bobineau se trouvant à l'intérieur du générateur, et plus précisément les électrodes, avec une application extérieure à alimenter. Elle peut être constituée du couvercle lui-même, qui est alors accosté au bac du conteneur par l'intermédiaire d'un joint isolant, ou bien d'une borne comprenant une partie centrale conductrice se projetant à l'intérieur et à l'extérieur du générateur et une partie périphérique isolante assurant la jonction avec le couvercle.

La présente invention a pour avantage de mettre en oeuvre une connexion dont la longueur est bien inférieure à celle des connexions utilisées dans les générateurs de l'art antérieur. En effet la connexion de l'invention a une longueur moindre que celle qui lui serait nécessaire pour être en contact avec la sortie de courant lorsque le couvercle n'est pas dans sa position de fermeture. Il n'est donc pas possible d'effectuer la soudure de la connexion sur la partie interne de la sortie de courant lorsque le générateur est ouvert. Le procédé selon la présente invention permet de réaliser cette soudure après fermeture du générateur. Une fois cette soudure réalisée, sa qualité est contrôlée par une mesure de tension qui renseigne sur la valeur de la résistance de contact.

L'électrode comprend un support conducteur dont au moins une face est recouverte d'une couche contenant la matière électrochimiquement active. Selon un mode particulier de réalisation, l'électrode étant spiralée de manière à former un bobineau dont l'extrémité plane est constituée par la tranche du support. La connexion comporte une partie plane qui est soudée sur la tranche du support conducteur de l'électrode afin de réaliser la liaison électrique entre la connexion et l'électrode.

De préférence la connexion comporte une partie plane destinée à être reliée à l'électrode et au moins une languette qui est destinée à être reliée à la sortie de courant. Lors de la fermeture du couvercle, la partie plane et la languette se trouvent dans des plans différents de manière à ce que la languette soit en contact avec la sortie de courant. Avantageusement la languette se présente de telle sorte qu'elle forme un ressort s'appuyant sur la partie interne de la sortie de courant. Pour les générateurs de faible puissance, le contact ainsi assuré peut sembler suffisant pour assurer la continuité électrique. Mais pour des générateurs de plus forte puissance, il est nécessaire que la connexion soit soudée sur la sortie de courant.

De préférence la tension appliquée entre ledit bac est ladite sortie de courant est comprise entre 1,3V et 15V.

De préférence encore le courant appliqué entre ledit bac est ladite sortie de courant comporte une pointe de courant comprise entre 5000 et 15000A.

Les connexions se présentent en ligne reliée les unes aux autres par des points fusibles. Selon une forme particulière de réalisation de l'invention, les connexions sont séparées les unes des autres par fusion de leurs points de jonction.

La présente invention a encore pour objet un générateur électrochimique fabriqué par le procédé précédemment décrit, comprenant un conteneur comportant un bac et un couvercle portant une sortie de courant électriquement isolée dudit bac et au moins une électrode électriquement reliée à une connexion.

Selon l'invention la longueur de la connexion est insuffisante pour que la connexion soit en contact avec la sortie de courant lorsque le couvercle n'est pas dans sa position de fermeture. L'utilisation d'une connexion très courte conduit à un gain de place à l'intérieur du générateur permettant d'augmenter la hauteur du bobineau et de gagner ainsi en capacité. Ainsi les performances du générateur sont améliorées en terme de capacité volumique.

La connexion est de préférence en inox, acier, acier nickelé ou nickel.

Selon une autre forme d'exécution de l'invention, ladite connexion comporte une partie plane destinée à être reliée à au moins une électrode et au moins une languette destinée à être reliée à la sortie de courant.

Selon une forme d'exécution de l'invention, le générateur électrochimique est cylindrique. L'électrode comprend un support conducteur dont au moins une face est recouverte d'une couche contenant la matière électrochimiquement active. L'électrode est spiralée de manière à former un bobineau dont l'extrémité plane est constituée par la tranche du support. De préférence la partie plane de la connexion est soudée sur l'extrémité plane du bobineau.

D'autres caractéristiques et avantages de la présente invention apparaîtront au cours de la description suivante de modes de réalisation, donnés bien entendu à titre illustratif et non limitatif, et dans le dessin annexé sur lequel
- la figure 1 est une vue schématique en coupe représentant l'opération de soudure d'une connexion sur une sortie de courant par le procédé de l'art antérieur,
- la figure 2 est une vue schématique en coupe représentant l'opération de soudure d'une connexion sur une sortie de courant par le procédé de l'invention,
- les figures 3A et 3B montrent deux exemples de connexion utilisable dans le procédé selon l'invention.
- La figure 4 montre une bande avant découpe composée de plusieurs connexions utilisable dans le procédé selon l'invention.

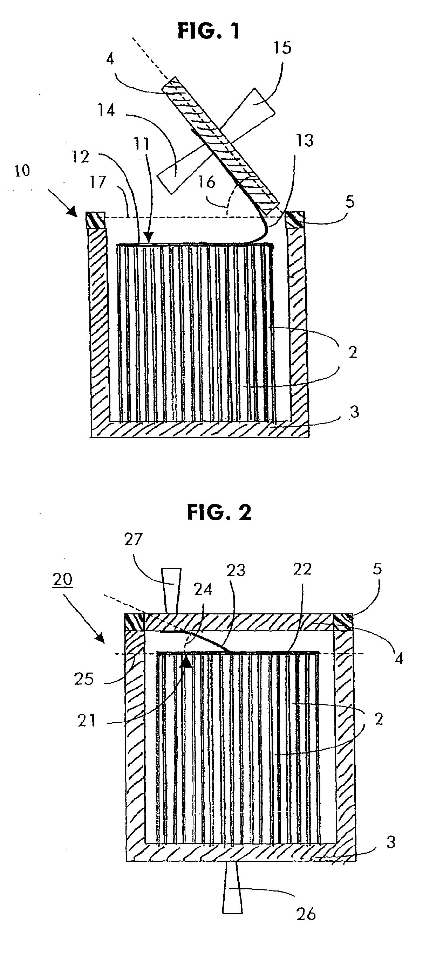

Sur la figure 1 est représenté en coupe un générateur électrochimique 1 comprenant des électrodes 2 réunies dans un conteneur composé d'un bac 3 et d'un couvercle 4. Le bac 3 et le couvercle 4 se raccordent par l'intermédiaire d'un joint isolant 5. Le générateur 1 contient une connexion 11 qui est composée d'une partie plane 12 soudée sur la tranche des électrodes 2 d'une même polarité, et d'une languette 13. Par un procédé de l'art antérieur, on vient souder la languette 13 sur le couvercle 4 constituant ici une sortie de courant. La languette 13 est appliquée sur la face interne du couvercle 4. L'ensemble languette 13 / couvercle 4 est pincé entre une électrode 14 et une contre-électrode 15 afin de réaliser la soudure. Pendant l'opération de soudure, le couvercle 4 fait un angle 16 avec le plan 17 de sa position de fermeture de manière à dégager un passage suffisant pour l'électrode 14 et la contre-électrode 15 . Enfin le couvercle 4 est rabattu sur le bac 3.

On retrouve sur la figure 2, les éléments principaux du générateur 1 de la figure 1. Mais dans ce cas le générateur 20 contient une connexion 21 qui est composée d'une partie plane 22 soudée sur la tranche des électrodes 2 et d'une languette courte 23 qui fait un angle 24 avec le plan 25 de la partie plane. Le couvercle 4 est rabattu sur le bac 3 et s'y raccorde par l'intermédiaire du joint isolant 5. La valeur de l'angle 24 est telle qu'une fois le couvercle 4 en place, la languette 23 s'applique sur la face interne du couvercle 4 qui constitue ici une sortie de courant. Par le procédé selon l'invention, on vient souder la languette 23 sur le couvercle 4 à l'aide d'une première électrode 26 appliquée sur le fond du bac 3 et d'une deuxième électrode 27 positionnée sur la face externe du couvercle 4 au droit de la zone d'appui de la languette 23 sur la face interne du couvercle 4. Une tension supérieure à la tension du générateur 20 est appliquée entre les deux électrodes 26, 27 pendant une durée de 5msec à 30msec avec une pointe de courant comprise entre 5000A et 15000A.

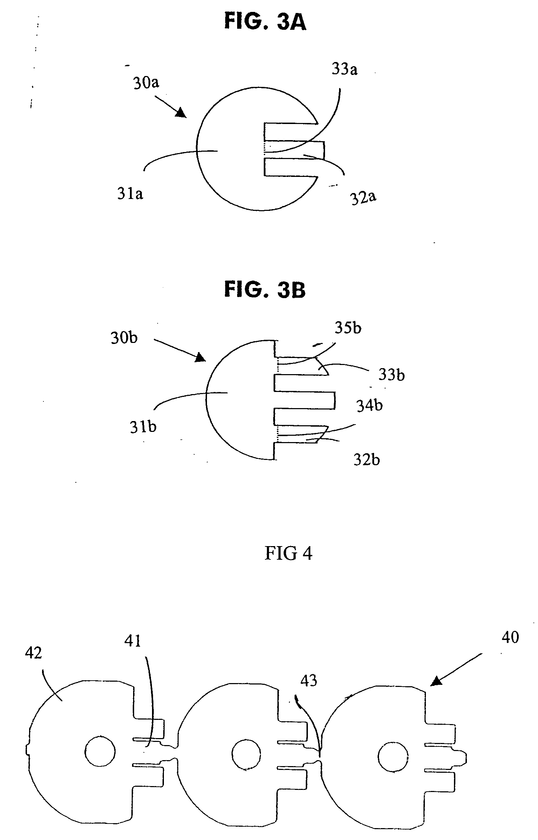

Les figures 3A et 3B montre deux variantes de forme pour une connexion utilisable dans le procédé selon l'invention. La connexion 30a comprend une partie plane 31a et une languette 32a qui est redressée selon la ligne de pliure 33a dans un plan faisant un angle avec celui de la partie plane 31a.

La connexion 30b comprend une partie plane 31b et deux languettes 32b et 33b qui sont redressées respectivement selon les lignes de pliure 34b et 35b dans un plan faisant un angle avec celui de la partie plane 31b. Dans ce cas une soudure est réalisée par le procédé selon l'invention respectivement sur chaque languette 32b et 33b.

On a représenté sur la figure 4 une bande de connexions courtes 40 selon l'invention comprenant une languette 41 prolongeant une partie plane 42. Les connexions 40 sont reliées les unes aux autres par une languette 41. A l'extrémité de la languette 41 qui est reliée à la partie plane 42 de la connexion voisine se trouvent des ponts 43 aisément fusibles par passage de courant. La fusion des ponts 43 permet de séparer les connexions 40 les unes des autres.

## Revendications

1. Procédé de fabrication d'un générateur électrochimique secondaire (20) comprenant un conteneur comportant un bac (3) et un couvercle (4) portant une sortie de courant électriquement isolée dudit bac, et au moins une électrode (2) électriquement reliée à une connexion (21), **caractérisé en ce qu'**il comporte une phase de raccordement électrique de ladite connexion à ladite sortie de courant comprenant les étapes suivantes :
on relie électriquement une première extrémité (22) de ladite connexion à ladite électrode,
on met en place ledit couvercle sur ledit bac afin de fermer ledit conteneur de manière à ce qu'une deuxième extrémité (23) de ladite connexion se trouve en contact physique avec ladite sortie de courant, la longueur de ladite connexion ne lui permettant pas d'être en contact avec ladite sortie de courant lorsque ledit couvercle n'est pas dans la position de fermeture dudit générateur,
on applique un courant électrique entre ledit bac et ladite sortie de courant de manière à souder ladite deuxième extrémité de ladite connexion sur ladite sortie de courant.

2. Procédé selon la revendication 1, dans lequel ladite électrode (2) comprend un support conducteur dont au moins une face est recouverte d'une couche contenant la matière électrochimiquement active, ladite électrode étant spiralée de manière à former un bobineau dont l'extrémité plane est constituée par la tranche dudit support, et dans lequel ladite connexion (21) comporte une partie plane (22) qui est soudée sur ladite tranche afin de réaliser la liaison électrique entre ladite connexion et ladite électrode.

3. Procédé selon l'une des revendications 1 et 2, dans lequel ladite connexion (21) comporte une partie plane (22) destinée à être reliée à ladite au moins une électrode (2) et au moins une languette (23) destinée à être reliée à ladite sortie de courant, ladite partie plane et ladite languette se trouvant dans des plans différents lors de la fermeture du couvercle (4) de manière à ce que ladite languette soit en contact avec la sortie de courant.

4. Procédé selon l'une des revendications précédentes, dans lequel la tension appliquée entre ledit bac et ladite sortie de courant est supérieure à la tension dudit générateur.

5. Procédé selon l'une des revendications précédentes, dans lequel le courant appliqué entre ledit bac et ladite sortie de courant comporte une pointe de courant comprise entre 5 000 A et 15 000 A.

6. Procédé selon l'une des revendications précédentes, dans lequel lesdites connexions (40) sont séparées les unes des autres par fusion de leurs points de jonction (43).

7. Générateur électrochimique (20) fabriqué par un procédé selon l'une quelconque des revendications 1 à 6, comprenant un conteneur comportant un bac (3) et un couvercle (4) portant une sortie de courant électriquement isolée dudit bac et au moins une électrode (2) électriquement reliée à une connexion (21), **caractérisé en ce que** la longueur de ladite connexion est insuffisante pour que ladite connexion soit en contact avec ladite sortie de courant lorsque le couvercle n'est pas dans sa position de fermeture.

8. Générateur selon la revendication 7, dans lequel ladite connexion (21) est en un métal choisi parmi l'acier, l'acier inox, l'acier nickelé et le nickel.

9. Générateur selon l'une des revendications 7 et 8, dans lequel ladite connexion (21) comporte une partie plane (22) destinée à être reliée à ladite au moins une électrode (2), et au moins une languette (23) destinée à être reliée à ladite sortie de courant.

10. Générateur selon l'une des revendications 7 à 9, dans lequel ladite électrode (2) comprend un support conducteur dont au moins une face est recouverte d'une couche contenant la matière électrochimiquement active, ladite électrode étant spiralée de manière à former un bobineau dont l'extrémité plane est constituée par la tranche dudit support.

11. Générateur selon la revendication 10, dans lequel la partie plane de ladite connexion (22) est soudée sur l'extrémité plane dudit bobineau (25).
